(19) Europäisches Patentamt
European Patent Office
Office européen des brevets

(11) EP 3 954 723 A1

(12) **EUROPEAN PATENT APPLICATION**
published in accordance with Art. 153(4) EPC

(43) Date of publication:
**16.02.2022 Bulletin 2022/07**

(21) Application number: **20786990.0**

(22) Date of filing: **07.04.2020**

(51) International Patent Classification (IPC):
***C08G 59/24*** *(2006.01)*

(52) Cooperative Patent Classification (CPC):
**C08G 59/24**

(86) International application number:
**PCT/JP2020/015609**

(87) International publication number:
**WO 2020/209241 (15.10.2020 Gazette 2020/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.04.2019 JP 2019074233**

(71) Applicant: **ENEOS Corporation**
**Chiyoda-ku**
**Tokyo 100-8162 (JP)**

(72) Inventor: **KAMEYAMA Atsushi**
**Tokyo 100-8162 (JP)**

(74) Representative: **Müller-Boré & Partner Patentanwälte PartG mbB**
**Friedenheimer Brücke 21**
**80639 München (DE)**

(54) **CURABLE COMPOSITION AND CURED PRODUCT OF SAME**

(57) [Problem to be Solved]

To provide a curable composition capable of producing a cured product having excellent heat resistance and low outgassing properties.

[Means to Solve the Problem]

A curable composition comprising an epoxy compound represented by formula (1):

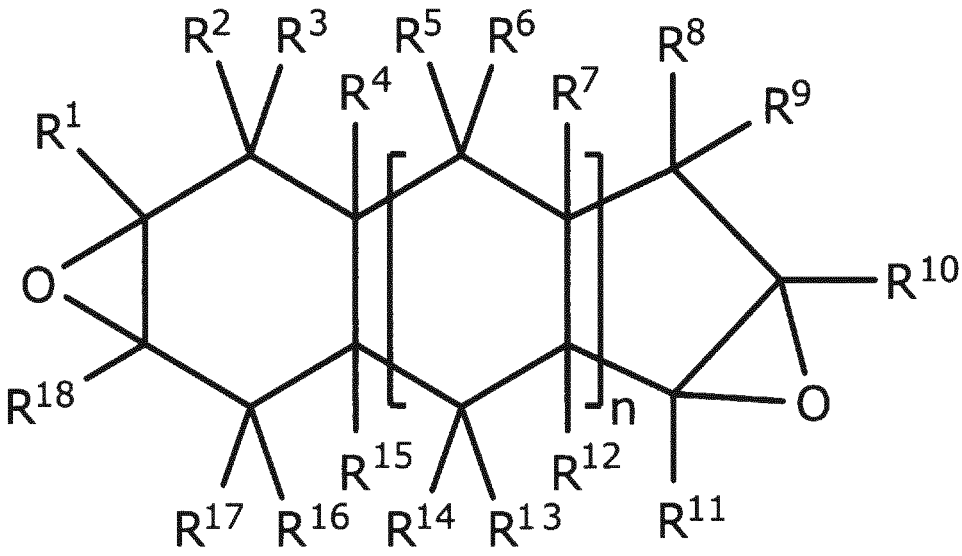

(1)



EP 3 954 723 A1

wherein $R^1$ to $R^4$, $R^7$ to $R^{12}$, and $R^{15}$ to $R^{18}$ are each independently selected from the group consisting of hydrogen, an alkyl group, and an alkoxy group;
$R^5$, $R^6$, $R^{13}$, and $R^{14}$ are each independently selected from the group consisting of hydrogen, an alkyl group, and an alkoxy group; or one of $R^5$ or $R^6$ and one of $R^{13}$ or $R^{14}$ may form a cross-linked structure represented by $-CH_2-$, and n is an integer of 0 or 1,
and a cationic polymerization initiator containing a Lewis acid and a Lewis base.

## Description

### BACKGROUND OF THE INVENTION

Field of the Invention

The present invention relates to a curable composition comprising an epoxy compound and a cationic polymerization initiator containing a Lewis acid and a Lewis base, and a cured product obtained by curing the curable composition.

Background Art

A curable composition containing an epoxy compound is used as a material for a surface protective film of a semiconductor element or an organic thin film element (for example, an organic electroluminescent element or an organic thin film solar cell element), an interlayer insulator, a protective insulating film for a printed wiring board, a fiber-reinforced composite material, and the like. For example, Patent Document 1 discloses a curable composition containing a diepoxy compound having an alicyclic skeleton and a cationic polymerization initiator (a photo-acid generator or a thermal acid generator), and a cured product thereof. The curable composition disclosed in Patent Document 1 has properties of high-speed curability and low viscosity, and a cured product of the curable composition has excellent heat resistance. Patent Document 2 discloses a curable composition containing a diepoxy compound having an alicyclic skeleton and a thermal cationic polymerization initiator or a photocationic polymerization initiator, and a cured product thereof. The cured product of the curable composition disclosed in Patent Document 2 has excellent heat resistance.

Prior Art Document

[Patent Document]

Patent Document 1: WO2014/175129
Patent Document 2: WO2017/164238

### SUMMARY OF THE INVENTION

[Problems to be solved by the Invention]

In the course of studying a curable composition which exhibits excellent heat resistance when cured by containing an epoxy compound and a cationic polymerization initiator, the present inventors have found that when curing is done by containing an onium salt-type cationic polymerization initiator in the curable composition, outgas is generated from the cured product. When an intensive search was made for a cationic polymerization initiator capable of suppressing the generation of outgas, it was found that a cationic polymerization initiator containing a Lewis acid and a Lewis base can suppress the generation of outgas. The present invention is based on this finding.
Accordingly, it is an object of the present invention to provide a curable composition capable of producing a cured product having excellent heat resistance and low outgassing properties.

[Means for solving the problem]

The present invention encompasses the following inventions.

[1] A curable composition comprising an epoxy compound represented by formula (1):

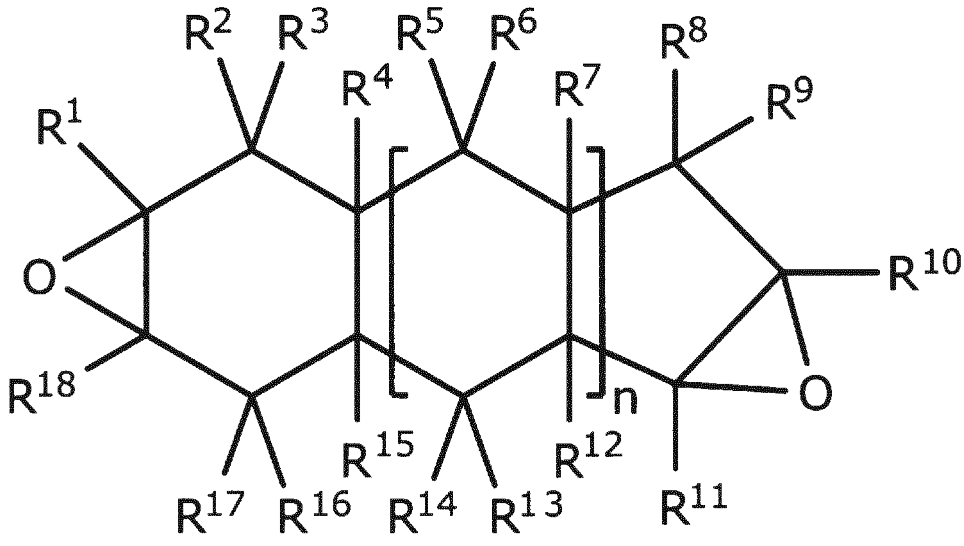

(1)

wherein $R^1$ to $R^4$, $R^7$ to $R^{12}$, and $R^{15}$ to $R^{18}$ are each independently selected from the group consisting of hydrogen, an alkyl group, and an alkoxy group;
$R^5$, $R^6$, $R^{13}$, and $R^{14}$ are each independently selected from the group consisting of hydrogen, an alkyl group, and an alkoxy group; or one of $R^5$ or $R^6$ and $R^{13}$ or $R^{14}$ may form a cross-linked structure represented by $-CH_2-$, and n is an integer of 0 or 1,
and a cationic polymerization initiator containing a Lewis acid and a Lewis base.

[2] The curable composition according to [1], wherein the Lewis acid is a compound containing boron.
[3] The curable composition according to [1] or [2], wherein the Lewis acid is tris(pentafluorophenyl)borane.
[4] The curable composition according to any one of [1] to [3], wherein the Lewis base is an amine compound.
[5] The curable composition according to any one of [1] to [4], wherein the Lewis base is an amine compound having a piperidine structure.
[6] The curable composition according to any one of [1] to [5], wherein the cationic polymerization initiator is a complex of tris(pentafluorophenyl)borane and an amine compound having a piperidine structure.
[7] The curable composition according to any one of [1] to [6], further comprising one or two or more selected from the group consisting of an epoxy compound other than the compound represented by formula (1), an oxetane compound, and a vinyl ether compound.
[8] The curable composition according to any one of [1] to [7], wherein the content of the epoxy compound represented by formula (1) is 10 to 99 % by mass.
[9] The curable composition according to any one of [1] to [8], wherein the cationic polymerization initiator is a thermal cationic polymerization initiator.
[10] The curable composition according to [9], wherein the content of the thermal cationic polymerization initiator is 0.1 to 15 parts by mass with respect to 100 parts by mass of the epoxy compound represented by formula (1) contained in the curable composition when the curable composition contains none of an epoxy compound other than the compound represented by formula (1), an oxetane compound, or a vinyl ether compound, and is 0.1 to 15 parts by mass with respect to the total of 100 parts by mass of the epoxy compound represented by formula (1) contained in the curable composition, an epoxy compound other than the compound represented by formula (1), an oxetane compound, and a vinyl ether compound when the curable composition contains one or two or more selected from the group consisting of the epoxy compound other than the compound represented by formula (1), an oxetane compound, and a vinyl ether compound.
[11] The curable composition according to any one of [1] to [8], wherein the cationic polymerization initiator is a photocationic polymerization initiator.
[12] The curable composition according to [11], wherein the content of the photocationic polymerization initiator is 0.1 to 20 parts by mass with respect to 100 parts by mass of the epoxy compound represented by formula (1) contained in the curable composition when the curable composition contains none of an epoxy compound other

than the compound represented by formula (1), an oxetane compound, or a vinyl ether compound, and is 0.1 to 20 parts by mass with respect to the total of 100 parts by mass of the epoxy compound represented by formula (1) contained in the curable composition, an epoxy compound other than the compound represented by formula (1), an oxetane compound, and a vinyl ether compound when the curable composition contains one or two or more selected from the group consisting of the epoxy compound other than the compound represented by formula (1), an oxetane compound, and a vinyl ether compound.

[13] The curable composition according to any one of [7] to [12], wherein the epoxy compound other than the compound represented by formula (1) is one or more epoxy compounds selected from the group consisting of glycidyl ether type epoxide, glycidyl ester type epoxide, and alicyclic epoxide.

[14] A method for producing a cured product, comprising the step of curing the curable composition according to any one of [1] to [13].

[15] A cured product of the curable composition according to any one of [1] to [13].

[Effect of the Invention]

The present invention is advantageous in that it is possible to provide an epoxy compound capable of producing a cured product having excellent heat resistance and low outgassing properties.

[Mode for carrying out the invention]

1. Definition

In the present specification, "part", "%" and the like indicating compositions are on a mass basis unless otherwise specified.

In the present specification, an epoxy equivalent is defined as the mass of an epoxy compound containing one equivalent of epoxy groups. Here, when a mixture consists of m kinds of epoxy compounds (where m is an integer of 2 or more), the epoxy equivalent of the mixture is represented as follows.

$$\text{Epoxy equivalent of a mixture consisting of epoxy compound(s)} = \frac{\sum_{n=1}^{m} \text{Mass of epoxy compound } n}{\sum_{n=1}^{m} \dfrac{\text{Mass of epoxy compound } n}{\text{Epoxy equivalent of epoxy compound } n}}$$

The epoxy equivalent of an epoxy compound can be measured according to JIS K7236.

2. Curable Composition

The curable composition of the present invention is characterized in that it comprises an epoxy compound represented by formula (1):

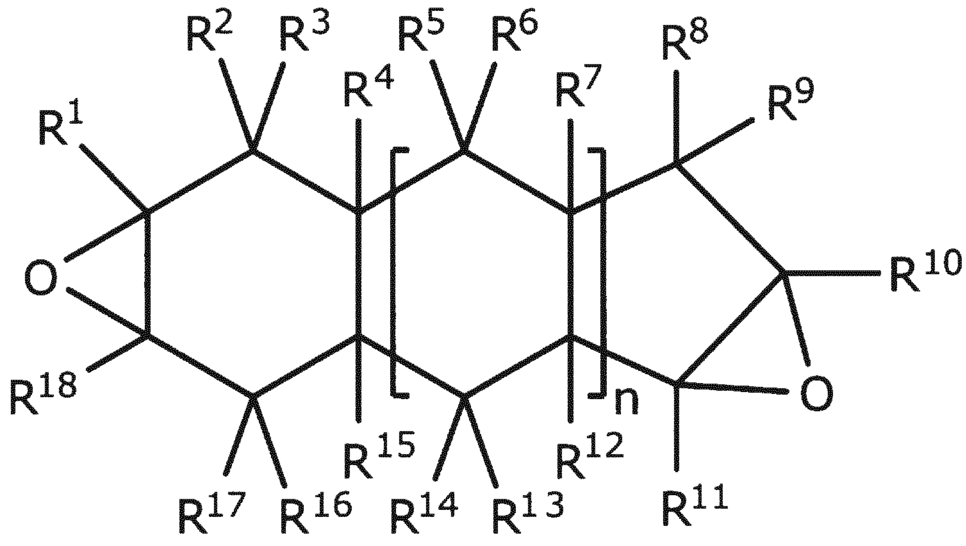

(1)

wherein $R^1$ to $R^4$, $R^7$ to $R^{12}$, and $R^{15}$ to $R^{18}$ are each independently selected from the group consisting of hydrogen, an alkyl group, and an alkoxy group;
$R^5$, $R^6$, $R^{13}$, and $R^{14}$ are each independently selected from the group consisting of hydrogen, an alkyl group, and an alkoxy group; or one of $R^5$ or $R^6$ and one of $R^{13}$ or $R^{14}$ may form a cross-linked structure represented by $-CH_2-$, and n is an integer of 0 or 1,
and a cationic polymerization initiator containing a Lewis acid and a Lewis base. By including an epoxy compound represented by formula (1) and a cationic polymerization initiator containing a Lewis acid and a Lewis base in the curable composition, it is possible to produce a cured product having excellent heat resistance and low outgassing properties.

(1) Epoxy compound

The epoxy compound contained in the curable composition of the present invention is in which $R^1$ to $R^4$, $R^7$ to $R^{12}$, and $R^{15}$ to $R^{18}$ in the above-described formula (1) are each independently selected from the group consisting of hydrogen, an alkyl group, and an alkoxy group. Amongst these, hydrogen is preferable. The number of carbon atoms contained in the alkyl group is preferably 1 to 10, more preferably 1 to 5. The alkyl group may be a linear alkyl group or a branched alkyl group. The alkoxy group preferably has 1 to 10 carbon atoms, more preferably 1 to 5 carbon atoms. Particularly preferably, $R^1$ to $R^4$, $R^7$ to $R^{12}$, and $R^{15}$ to $R^{18}$ are all hydrogen.
In formula (1), $R^5$, $R^6$, $R^{13}$, and $R^{14}$ are each independently selected from the group consisting of hydrogen, an alkyl group, and an alkoxy group. Among these, hydrogen is preferable. The alkyl group preferably has 1 to 10 carbon atoms, and more preferably 1 to 5 carbon atoms. In addition, the alkyl group may be a linear alkyl group or a branched alkyl group. The alkoxy group preferably has 1 to 10 carbon atoms, and more preferably 1 to 5 carbon atoms. Alternatively, one of $R^5$ or $R^6$ and one of $R^{13}$ or $R^{14}$ may form a cross-linked structure represented by $-CH_2-$.
Among the options of $R^5$, $R^6$, $R^{13}$, and $R^{14}$, more preferably, one of $R^5$ or $R^6$ and one of $R^{13}$ or $R^{14}$ may form a cross-linked structure represented by $-CH_2-$, and further more preferably, $R^5$ and $R^{14}$ form a cross-linked structure represented by $-CH_2-$ and $R^6$ and $R^{13}$ are hydrogen.
In the above formula (1), n is an integer of 0 or 1.
As a preferred embodiment of the present invention, the epoxy compound represented by formula (1) contained in the curable composition of the present invention is represented by the following formula (2-1):

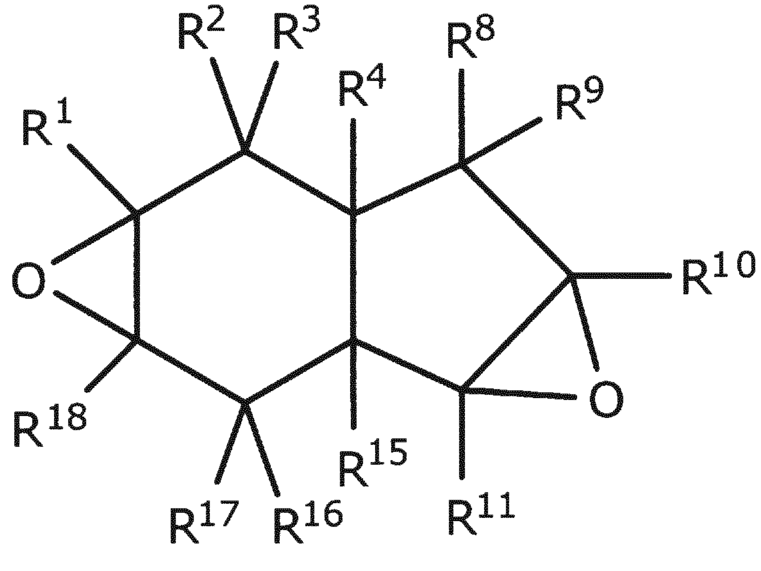

(2-1)

wherein $R^1$ to $R^4$, $R^8$ to $R^{11}$, and $R^{15}$ to $R^{18}$ are each independently selected from the group consisting of hydrogen, an alkyl group, and an alkoxy group.

$R^1$ to $R^4$, $R^8$ to $R^{11}$, and $R^{15}$ to $R^{18}$ in the above-described formula (2-1) are as described in the above-described formula (1).

In another preferred embodiment of the present invention, the epoxy compound represented by formula (1) contained in the curable composition of the present invention is represented by the following formula (2-2):

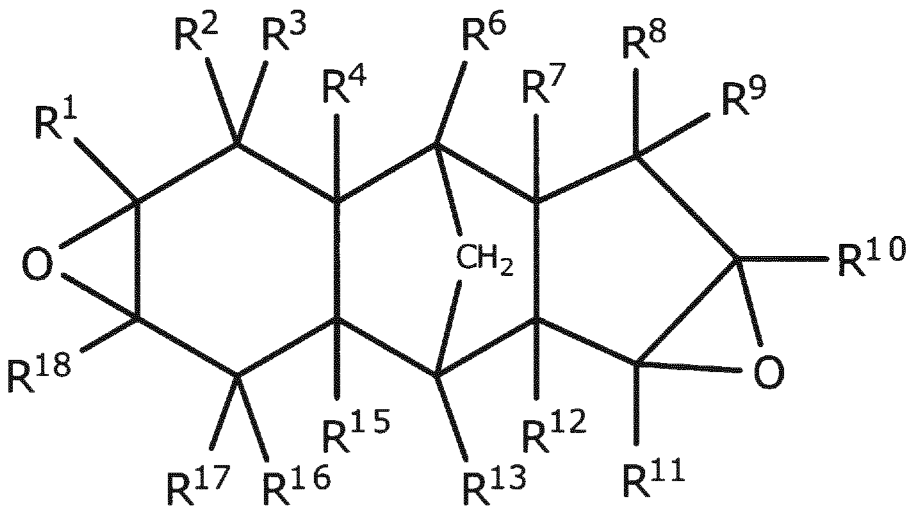

(2-2)

wherein $R^1$ to $R^4$, $R^6$ to $R^{13}$, and $R^{15}$ to $R^{18}$ are each independently selected from the group consisting of hydrogen, an alkyl group, and an alkoxy group.

$R^1$ to $R^4$, $R^6$ to $R^{13}$, and $R^{15}$ to $R^{18}$ in the above-described formula (2-2) are as described in the above-described formula (1).

In one embodiment of the invention, the epoxy compound represented by formula (1) contained in the curable composition of the present invention can be synthesized by reacting an olefin compound represented by the following

formula (3):

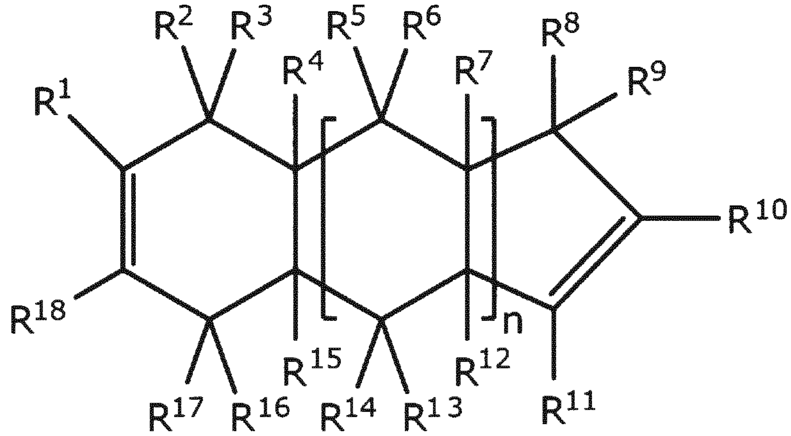

(3)

wherein $R^1$ to $R^4$, $R^7$ to $R^{12}$, and $R^{15}$ to $R^{18}$ are each independently selected from the group consisting of hydrogen, an alkyl group, and an alkoxy group;

$R^5$, $R^6$, $R^{13}$, and $R^{14}$ are each independently selected from the group consisting of hydrogen, an alkyl group, and an alkoxy group; or one of $R^5$ or $R^6$ and one of $R^{13}$ or $R^{14}$ may form a cross-linked structure represented by $-CH_2-$, and n is an integer of 0 or 1,

and a peracid such as hydrogen peroxide, peracetic acid and perbenzoic acid. It can also be synthesized by the methods disclosed in WO2014 /175129 and WO2017/164238.

$R^1$ to $R^{18}$ and n in the above-described formula (3) are as described in the above-described formula (1).

In one embodiment, a compound satisfying the above-described formula (3) can be synthesized by a Diels-Alder reaction between a conjugated diene compound and an alkene compound based on knowledge already known to those skilled in the art.

The epoxy compound represented by the above-described formula (1) contained in the curable composition of the present invention has an epoxy equivalent of preferably 60 to 600 g/eq, more preferably 60 to 300 g/eq, and further preferably 70 to 200 g/eq. The curable composition of the present invention may contain other compounds as described below, but from the viewpoint of excellent heat resistance of the cured product, the content of the epoxy compound represented by the above-described formula (1) contained in the curable composition of the present invention is preferably 10 to 99 % by mass, more preferably 10 to 80 % by mass, and further preferably 20 to 80 % by mass.

(2) Cationic polymerization initiator

The cationic polymerization initiator contained in the curable composition of the present invention contains a Lewis acid and a Lewis base. Such Lewis acid and Lewis base may be one forming a salt or a complex. By combining an epoxy compound represented by formula (1) with a cationic polymerization initiator containing a Lewis acid and a Lewis base, it is possible to produce a cured product having excellent heat resistance and low outgassing properties.

The mixing ratio of the Lewis acid and the Lewis base in the cationic polymerization initiator in the curable composition according to the present invention does not have to be a stoichiometric ratio. That is, either one of the Lewis acid and the Lewis base (converted into a base point amount) may be contained in excess of the theoretical amount (equivalent amount). That is, even if the mixing ratio of the Lewis acid and the Lewis base in the cationic curing catalyst, expressed in the ratio (n (b) / n (a)) of the number of atoms n (b) of the atoms which is to be the Lewis base point to the number of atoms n (a) of the atoms which is to be the Lewis acid point is not 1 (stoichiometric ratio), the cationic polymerization initiator can be activated.

Examples of the cationic polymerization initiator included in the curable composition according to the present invention include a thermal cationic polymerization initiator (an initiator capable of generating cationic active species by thermal energy) and a photocationic polymerization initiator (an initiator capable of generating cationic active species by irradiation with light or electron beams).

The content of the cationic polymerization initiator in the curable composition according to the present invention

is preferably 0.01 to 20 parts by mass, more preferably 0.05 to 18 parts by mass, and further preferably 0.1 to 15 parts by mass, with respect to 100 parts by mass of the epoxy compound represented by the above-described formula (1) contained in the curable composition when the curable composition contains none of an epoxy compound other than the compound represented by formula (1) to be described below, an oxetane compound to be described below, or a vinyl ether compound to be described below. The content of the cationic polymerization initiator in the curable composition according to the present invention is also preferably 0.01 to 20 parts by mass, more preferably 0.05 to 18 parts by mass, and further preferably 0.1 to 15 parts by mass with respect to the total of 100 parts by mass of the epoxy compound represented by formula (1) contained in the curable composition, an epoxy compound other than the compound represented by formula (1), an oxetane compound, and a vinyl ether compound when the curable composition contains one or two or more selected from the group consisting of the epoxy compound other than the compound represented by formula (1), an oxetane compound, and a vinyl ether compound.

(2-1) Lewis acid

The Lewis acid is not particularly limited as long as it is a compound having a property of receiving electron pairs, and examples thereof include compounds containing atoms such as boron, aluminum, titanium, zinc, tin, gallium, indium, thallium, scandium, ytterbium, vanadium, chromium, manganese, cobalt, nickel, iron, copper and the like. From the viewpoint of availability, a compound containing boron, aluminum, titanium, zinc, tin is preferable in particular, and more preferably, a compound containing boron.

A boron-containing compound includes, for example, 3-boron halide, boric acid, boric acid ester, and a compound represented by formula (4):

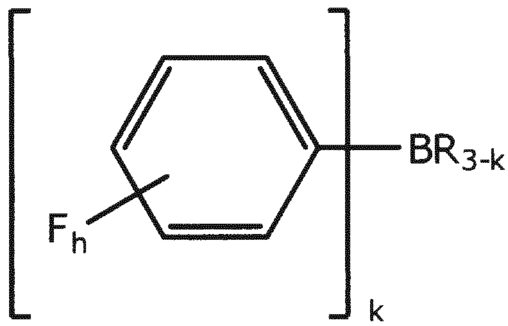

(4)

wherein

- R each independently represents a hydrocarbon group optionally having a substituent;
- h is an integer of 1 to 5, and each independently represents the number of fluorine atoms bonded to the aromatic ring; and
- k is an integer of 1 to 3.

In particular, a compound represented by formula (4) is preferable.

The hydrocarbon group in the compound represented by formula (4) is preferably a hydrocarbon group having 1 to 20 carbon atoms. The hydrocarbon group having 1 to 20 carbon atoms is not limited as long as the carbon atoms are 1 to 20 as a whole, but is preferably an alkyl group, an aryl group, or an alkenyl group. The alkyl group, aryl group, or alkenyl group may be an unsubstituted group or a group in which one or two or more hydrogen atoms are substituted by another organic group or a halogen atom. In this case, the other organic group may be an alkyl group (in the case where the hydrocarbon group represented by R is an alkyl group, the substituted hydrocarbon group as a whole corresponds to an unsubstituted alkyl group), aryl group, alkenyl group, alkoxy group, hydroxyl group, and the like.

h in the compound represented by formula (4) is an integer of 1 to 5, and independently represents the number of fluorine atoms bonded to the aromatic ring. h is preferably 2 to 5, more preferably 3 to 5, and further preferably 5.

Also, k is an integer of 1 to 3. That is, the Lewis acid is one in which at least one aromatic ring to which a fluorine atom is bonded is bonded to a boron atom. k is more preferably 2 or more, and further preferably 3, i.e., a form in which an aromatic ring to which a fluorine atom is bonded is bonded to three boron atoms. More preferred among the compounds represented by formula (4) is tris(pentafluorophenyl)borane.

Examples of boron trihalide include boron trifluoride, boron trichloride, boron tribromide, and the like. Examples of the boric ester include trimethyl borate, triethyl borate, triisopropyl borate, tributyl borate, triphenyl borate, and phenylboric acid.

Examples of an aluminum-containing compounds include triethylaluminum, triisobutylaluminum, tritertiarybutylaluminum, triphenylaluminum, trimethoxyaluminum, triethoxyaluminum, triisopropoxyaluminum, triisobutoxyaluminum, triphenoxyaluminum, diphenoxymethylaluminum, aluminum(III)acetylacetonate, aluminum chloride, ethylaluminum dichloride, methylaluminum-bis(2,6-di-tbutyl-4-methylphenoxide), and the like.

Examples of a titanium-containing compound include tetraisopropoxytitanium, tetraphenoxytitanium, diisopropoxy bisacetylacetonato titanium, bis(1,2benzenedioxy)titanium in which two molecules of catechol are bonded to titanium, bis(2,2'biphenyldioxy)titanium in which two molecules of 2,2'-biphenol are bonded to titanium, bis(2-oxybenzoyloxy)titanium in which two molecules of salicylic acid are bonded to titanium, tetratertiarybutoxy titanium, and the like.

Examples of a zinc-containing compound include zinc (II) chloride, zinc octanoate, and the like.

Examples of a compound containing tin include tin (II) chloride, tin (IV) chloride, tin octylate, dibutyltin dilaurate, and the like.

Preferred examples of the Lewis acid include boron trifluoride, boron trichloride, tris(pentafluorophenyl)borane, bis (pentafluorophenyl)phenylborane, pentafluorophenyl-diphenylborane, tris(4-fluorophenyl)borane, aluminum(III)acetylacetonate, aluminum chloride, zinc (II) chloride, tin (II) chloride, tin (IV) chloride, and the like. Among them, tris(pentafluorophenyl)borane is more preferable.

(2-2) Lewis base

The Lewis base is not limited as long as it can coordinate with the Lewis acid, for example, one which can form a coordination bond with a boron atom or the like contained in the Lewis acid, and one generally used as a Lewis base can be used, but preferred is a compound having an atom having an unshared electron pair. Specifically, a compound having a nitrogen atom, a phosphorus atom, or a sulfur atom is preferable. In this case, the Lewis base forms a coordination bond by providing an unshared electron pair contained in a nitrogen atom, phosphorous atom, and sulfur atom to the boron atom or the like of the Lewis acid. Further, a compound having a phosphorus atom or a nitrogen atom is more preferable.

Preferred examples of a compound having a nitrogen atom include amine compounds (monoamines, polyamines), ammonia, and the like. More preferred examples include an amine compound having a piperidine structure, amine compound having a hindered amine structure, amine compound having a low boiling point, and ammonia, and more preferred examples are an amine compound having a piperidine structure, polyamine having a hindered amine structure, and ammonia.

Examples of a compound having a phosphorus atom are preferably phosphines. Specific examples include triphenylphosphine, trimethylphosphine, tritoluylphosphine, methyldiphenylphosphine, 1,2-bis(diphenylphosphino)ethane, diphenylphosphine, and the like.

Preferred examples of a compound having a sulfur atom are preferably thiols and sulfides. Specific examples of the thiols include methylthiol, ethylthiol, propylthiol, hexylthiol, decanethiol, phenylthiol, and the like. Specific examples of the sulfides include diphenylsulfide, dimethylsulfide, diethylsulfide, methylphenylsulfide, methoxymethylphenylsulfide, and the like.

Preferably exemplified as the amine compound having a piperidine structure in the compound having a nitrogen atom are compounds having a piperidine structure described in (i) to (vi) below.

(i) An amine compound having a piperidine structure represented by the following formula (5):

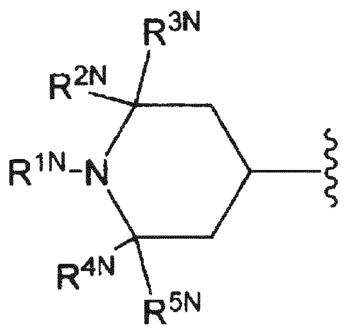

(5)

wherein

$R^{1N}$ to $R^{5N}$ each independently represents a hydrogen atom or an alkyl group having 1 to 6 carbon atoms.

The alkyl group having 1 to 6 carbon atoms refers to a linear or branched monovalent aliphatic saturated hydrocarbon group having 1 to 6 carbon atoms. Examples include a methyl group, ethyl group, n-propyl group, isopropyl group, n-butyl group, isobutyl group, t-butyl group, n-pentyl group, n-hexyl group, and the like. Amongst these, preferred is an alkyl group having 1 to 4 carbon atoms, more preferably an alkyl group having 1 or 2 carbon atoms, and particularly preferably a methyl group

(ii) The amine compound according to (i) wherein the amine compound has a piperidine structure represented by formula ( 6):

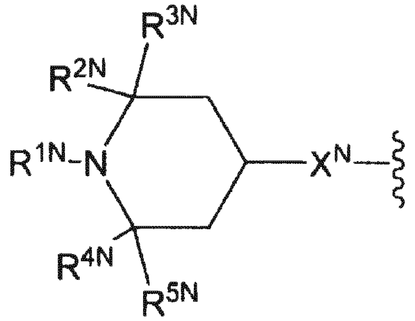

(6)

wherein $R^{1N}$ to $R^{5N}$ have the same meaning as in the above-described formula (5);
$X^N$ represents -O- group, -(C=O)-group, $-NR^{7N}$-group ($R^{7N}$ represents a hydrogen atom or an alkyl group having 1 to 6 carbon atoms), -O(C=O)-group, -(C=O)O-group, -NH(C=O)-group, or -(C=O)NH-group.

(iii) The amine compound according to (i) wherein the amine compound is a compound represented by the following formula (7).

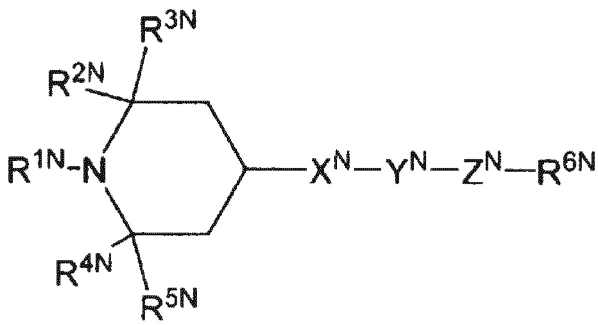

(7)

In formula (7),

$R^{1N}$ to $R^{5N}$ have the same meaning as in the above-described formula (5);
$X^N$ and $Z^N$ each independently represent -O- group, -(C=O)-group, $-NR^{7N}$-group ($R^{7N}$ represents a hydrogen atom or an alkyl group having 1 to 6 carbon atoms), -O(C=O)-group, -(C=O)O-group, -NH(C=O)-group, or -(C=O)NH-group ;
$Y^N$ represents an alkylene group having 1 to 20 carbon atoms optionally having a substituent; $R^{6N}$ represents a hydrogen atom, an alkyl group having 1 to 6 carbon atoms, or the piperidine structure; and the substituent optionally contained in the alkylene group having 1 to 20 carbon atoms represents one or more selected from the group consisting of a halogen atom, hydroxyl group, cycloalkyl group having 3 to 10 carbon atoms, alkoxy group having 1 to 6 carbon atoms, and aryl group having 6 to 14 carbon atoms optionally having a substituent; and

the substituent optionally contained in the aryl group having 6 to 14 carbon atoms is one or more selected from the group consisting of a halogen atom, hydroxyl group, alkyl group having 1 to 6 carbon atoms, and alkoxy group having 1 to 6 carbon atoms.

(iv) The amine compound according to (i) wherein the amine compound is a compound represented by the following formula (8):

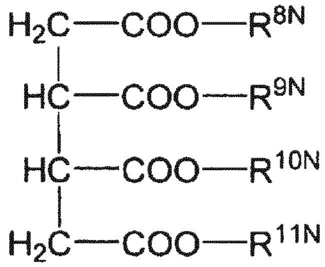

(8)

wherein at least one of $R^{8N}$ to $R^{11N}$ (i. e., 1, 2, 3 or 4) represents the above-described piperidine structure; and the remainder represents an alkyl group having 1 to 20 carbon atoms.

(v) The amine compound according to (i) wherein the amine compound is a polymer.

Note that an amine compound that is a polymer in the present invention refers to a compound having two or more repeating units and having three or more of the above-described piperidine structures. In the amine compound that is a polymer, the hydrogen atom of the >N-H group of the piperidine structure is optionally substituted with a cross-linking group between the piperidine structures.

(vi) The amine compound according to (i) wherein the amine compound is a compound represented by the following formula (9):

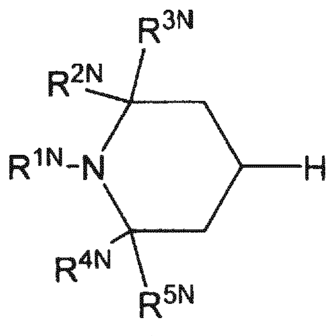

(9)

wherein $R^{1N}$ to $R^{5N}$ have the same meaning as in the above-described formula (5).

Specific examples of a preferable amine compound are shown in the following structural formulae. For example, preferable examples of the amine compound described in (iii) include the following compounds.

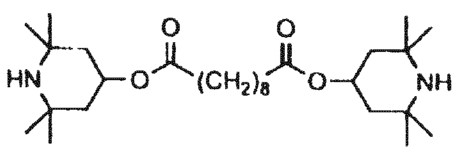

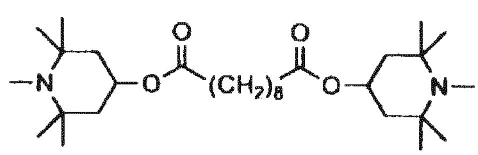

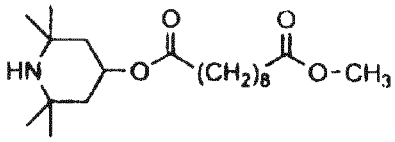

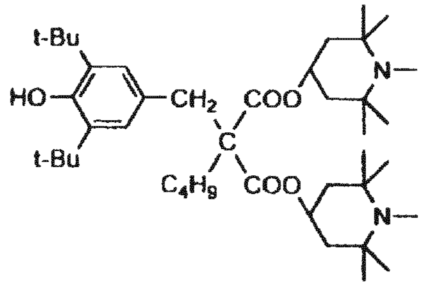

Preferable examples of the amine compound described in (iv) include the following compounds.

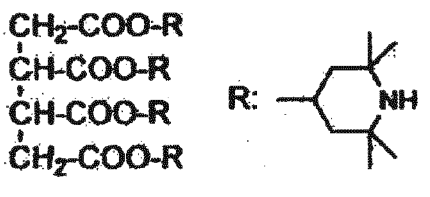

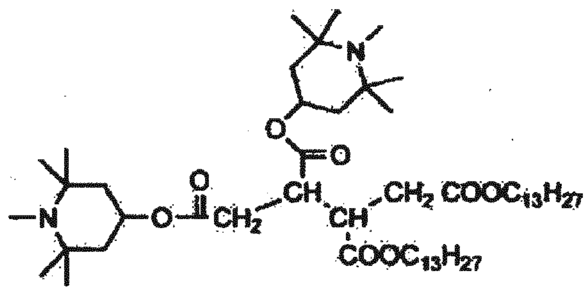

Preferable examples of the amine compound described in (v) include the following compounds.

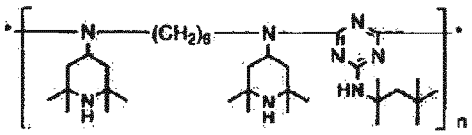

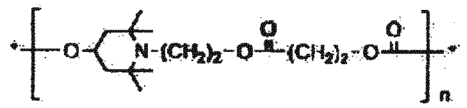

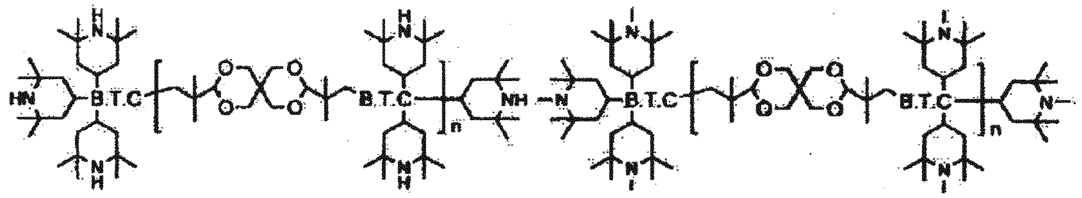

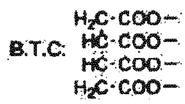

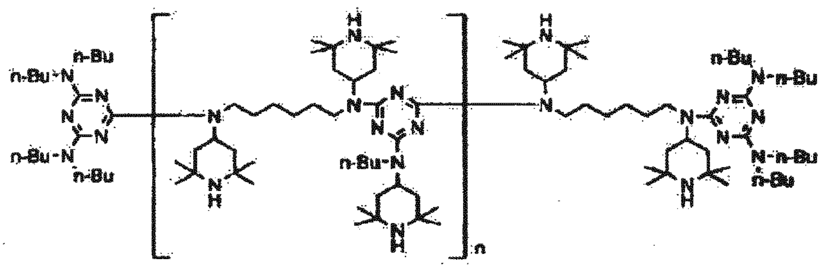

Preferable examples of the amine compound described in (vi) include the following compounds.

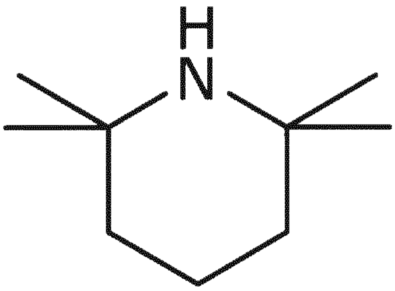

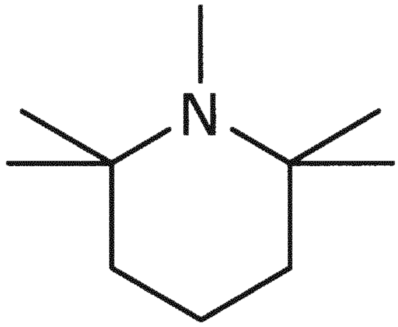

Among these, particularly preferred amine compounds include piperidine and the amine compounds described in Table 1.

[Table 1]

| |
|---|
| 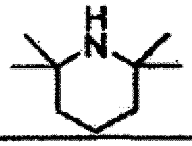 |
| 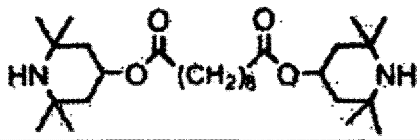 |
| 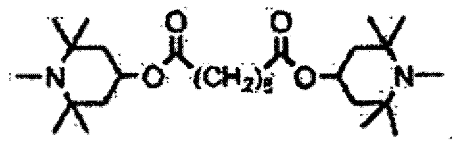 |
| 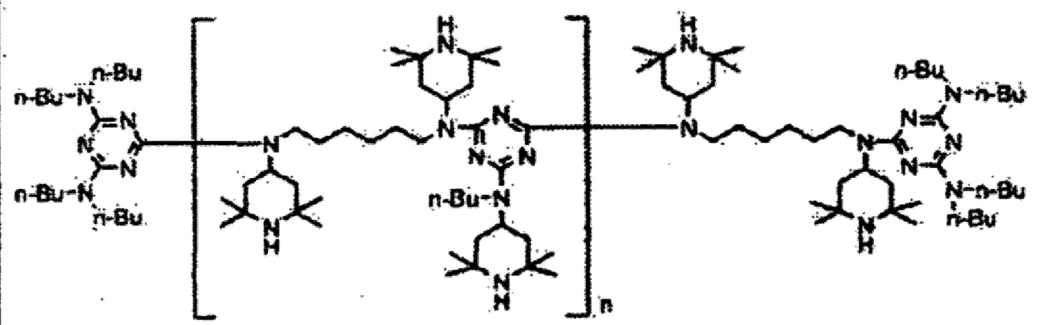 |
| 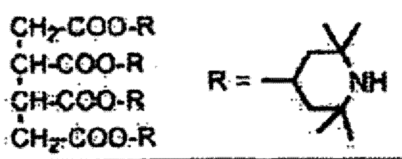 |

Preferred as the amine compound having a hindered amine structure is one which a nitrogen atom forming a coordination bond with a boron atom forms a secondary or tertiary amine, and more preferably, the amine compound is a diamine or higher polyamine. Examples of the amine having a hindered amine structure is an amine compound having a piperidine structure, specifically, 2,2,6,6-tetramethylpiperidine, N-methyl-2,2,6,6-tetramethylpiperidine; TINUVIN770, TINUVIN765, TINUVIN144, TINUVIN123, TINUVIN744, CHIMASSORB2020FDL (all manufactured by BASF); ADK STAB LA-52, ADK STAB LA-57 (all manufactured by ADEKA), and the like. Suitable among them are TINUVIN770, TINUVIN765, ADK STAB LA-52, and ADK STAB LA-57 having two or more hindered amine structures

per molecule.

Preferably used as the low-boiling amine is an amine having a boiling point of 120 °C or less, more preferably 80 °C or less, further preferably 50 °C or less, even preferably 30 °C or less, and particularly preferably 5 °C or less. Specific examples include primary amines such as monomethylamine, monoethylamine, monopropylamine, monobutylamine, monopentylamine and ethylenediamine; secondary amines such as dimethylamine, diethylamine, dipropylamine, methylethylamine and piperidine; and tertiary amines such as trimethylamine and triethylamine.

A preferred amine compound contained in the cationic polymerization initiator includes, for example, ethylamine, isopropylamine, aniline, benzylamine, dimethylamine, diethylamine, dibutylamine, dibenzylamine, dimethyloctylamine, piperidine, and compounds having a piperidine structure described in (i) to (vi) above described in WO2012/036164. Note that, 1 to 6 carbon atoms represents 1, 2, 3, 4, 5 or 6 carbon atoms; 1 to 20 carbon atoms represents 1, 2, 3, 4, 5, 6, 7, 8, 9, 10, 11, 12, 13, 14, 15, 16, 17, 18, 19 or 20 carbon atoms; 3 to 10 carbon atoms represents 3, 4, 5, 6, 7, 8, 9 or 10 carbon atoms; and 6 to 14 carbon atoms represents 6, 7, 8, 9, 11, 12, 13 or 14 carbon atoms.

Examples of a preferred cationic polymerization initiator include a compound containing aluminum, a complex of boron trifluoride with an amine compound such as piperidine, and a complex of tris(pentafluorophenyl)borane with an amine compound having a piperidine structure.

(2-3) Lewis acid and Lewis base complex

A preferred embodiment of the cationic polymerization initiator contained in the curable composition of the present invention is a Lewis acid and a Lewis base complex. Preferred examples of the complex include a complex of boron trifluoride with an amine compound such as piperidine and a complex of tris(pentafluorophenyl)borane with an amine compound such as piperidine. Further, a complex of a boron-containing compound and an amine compound disclosed in WO2012/036164 can be preferably used. The disclosure of the specification and/or drawings of WO2012/036164 is incorporated herein by reference.

A commercially available product can also be used as the complex. For example, boron trifluoride piperidine manufactured by Stella Chemifa and FX-TP-BC-PC series manufactured by Nippon Shokubai Co., Ltd. can be used.

When a complex of tris(pentafluorophenyl)borane and an amine compound having a piperidine structure is used as a cationic polymerization initiator contained in the curable composition of the present invention, the molar ratio of the piperidine structure in the amine compound to the tris(pentafluorophenyl)borane is preferably 0.9 or more, more preferably 1.0 or more. Since it is believed that some or all of the lone electron pairs of the nitrogen atom in the piperidine structure coordinate with the boron atom of the tris(pentafluorophenyl)borane to form a complex and control the catalytic activity thereof, there is a possibility that thermal latent properties can be enhanced by making such coordination sufficient. On the other hand, if the molar ratio is too large, the amount of the tris(pentafluorophenyl)borane relative to the amine compound in the composition becomes too small, there may be a risk that the polymerization catalytic ability cannot be sufficiently exhibited due to polymerization inhibition, and thus the molar ratio is preferably 20 or less, more preferably 15 or less, further preferably 10 or less, and particularly preferably 5 or less. The number of moles of the piperidine structure in the amine compound refers to the number of moles of the amine compound × the number of piperidine structures in the amine compound.

Mixing conditions of the amine compound and tris(pentafluorophenyl)borane are not particularly limited, and may be appropriately adjusted. For example, it is preferable that the amine compound or the solution thereof is added dropwise to the tris(pentafluorophenyl)borane solution while being stirred, or the other way round is also possible. The reaction temperature can be room temperature, more suitably from 20 °C to 40 °C. The reaction time is not particularly limited, and since the complex is formed quickly by dropping the amine compound or the solution thereof, there is no need to proceed for further reaction after the dropping. However, the stirring of the reaction mixture may be continued for 30 minutes or more and 5 hours or less after the dropping.

One of the above cationic polymerization initiators may be used alone or two or more by mixing.

(2-4) Thermal cationic polymerization initiator

When the above cationic polymerization initiator is used as a thermal cationic polymerization initiator, the content of the thermal cationic polymerization initiator in the curable composition of the present invention is preferably 0.1 to 15 parts by mass, more preferably 0.3 to 7 parts by mass, with respect to 100 parts by mass of the diepoxy compound represented by formula (1) contained in the curable composition, when the curable composition contains none of an epoxy compound other than the compound represented by formula (1) to be described below, an oxetane compound to be described below, or a vinyl ether compound to be described below. The content of the thermal cationic polymerization initiator in the curable composition of the present invention is preferably 0.1 to 15 parts by mass, and more preferably 0.3 to 7 parts by mass with respect to the total of 100 parts by mass of the diepoxy compound represented by formula (1) contained in the curable composition, an epoxy compound other than the compound represented by formula (1), an

oxetane compound, and a vinyl ether compound when the curable composition contains one or two or more selected from the group consisting of the epoxy compound other than the compound represented by formula (1), an oxetane compound, and a vinyl ether compound. By setting the content of the thermal cationic polymerization initiator within the above-mentioned numerical ranges, a cured product having excellent heat resistance and low outgassing properties can be produced.

(2-5) Photocationic polymerization initiator

When the above cationic polymerization initiator is used as a photocationic cationic polymerization initiator, the content of the photocationic cationic polymerization initiator in the curable composition of the present invention is preferably 0.1 to 20 parts by mass, more preferably 0.3 to 15 parts by mass, with respect to 100 parts by mass of the diepoxy compound represented by formula (1) contained in the curable composition, when the curable composition contains none of an epoxy compound other than the compound represented by formula (1) to be described below, an oxetane compound to be described below, or a vinyl ether compound to be described below. The content of the photocationic polymerization initiator in the curable composition of the present invention is preferably 0.1 to 20 parts by mass, and more preferably 0.3 to 15 parts by mass with respect to the total of 100 parts by mass of the diepoxy compound represented by formula (1) contained in the curable composition, an epoxy compound other than the compound represented by formula (1), an oxetane compound, and a vinyl ether compound when the curable composition contains one or two or more selected from the group consisting of the epoxy compound other than the compound represented by formula (1), an oxetane compound, and a vinyl ether compound. By setting the content of the photocationic polymerization initiator within the above-mentioned numerical ranges, a cured product having excellent heat resistance and low outgassing properties can be produced.

(3) Epoxy compounds other than the compound represented by formula (1)

The curable composition according to the present invention may contain an epoxy compound other than the compound represented by formula (1) (in the present specification, sometimes also referred to as "the other epoxy compound"), depending on the application. Examples of the epoxy compound other than the compound represented by the Formula (1) include glycidyl ether-type epoxides, glycidyl ester-type epoxides, glycidyl amine-type epoxides and alicyclic epoxides; as well as oligomers and polymers thereof.

Examples of the glycidyl ether-type epoxide include: glycidyl ethers of divalent phenols such as bisphenol A diglycidyl ether, bisphenol F diglycidyl ether, bisphenol S diglycidyl ether, tetramethyl biphenol diglycidyl ether, hydrogenated bisphenol A diglycidyl ether, and brominated bisphenol A diglycidyl ether; glycidyl ethers of polyvalent phenols such as dihydroxynaphthyl cresol triglycidyl ether, tris(hydroxyphenyl)methane triglycidyl ether, tetrakis(hydroxyphenyl)ethane tetraglycidyl ether, dinaphthyltriol triglycidyl ether, phenol novolac glycidyl ether, cresol novolac glycidyl ether, xylylene skeleton-containing phenol novolac glycidyl ethers, dicyclopentadiene skeleton-containing phenol novolac glycidyl ethers, biphenyl skeleton-containing phenol novolac glycidyl ethers, terpene skeleton-containing phenol novolac glycidyl ethers, bisphenol A novolac glycidyl ether, bisphenol F novolac glycidyl ether, bisphenol S novolac glycidyl ether, bisphenol AP novolac glycidyl ether, bisphenol C novolac glycidyl ether, bisphenol E novolac glycidyl ether, bisphenol Z novolac glycidyl ether, biphenol novolac glycidyl ether, tetramethyl bisphenol A novolac glycidyl ether, dimethyl bisphenol A novolac glycidyl ether, tetramethyl bisphenol F novolac glycidyl ether, dimethyl bisphenol F novolac glycidyl ether, tetramethyl bisphenol S novolac glycidyl ether, dimethyl bisphenol S novolac glycidyl ether, tetramethyl-4,4'-biphenol novolac glycidyl ether, trishydroxyphenylmethane novolac glycidyl ether, resorcinol novolac glycidyl ether, hydroquinone novolac glycidyl ether, pyrogallol novolac glycidyl ether, diisopropylidene novolac glycidyl ether, 1,1-di-4-hydroxyphenylfluorene novolac glycidyl ether, phenolated polybutadiene novolac glycidyl ether, ethylphenol novolac glycidyl ether, butylphenol novolac glycidyl ether, octylphenol novolac glycidyl ether, naphthol novolac glycidyl ether, and hydrogenated phenol novolac glycidyl ether; glycidyl ethers of divalent alcohols such as ethylene glycol diglycidyl ether, propylene glycol diglycidyl ether, tetramethylene glycol diglycidyl ether, 1,6-hexanediol diglycidyl ether, cyclohexanedimethylol diglycidyl ether, polyethylene glycol diglycidyl ether, and polypropylene glycol diglycidyl ether;glycidyl ethers of polyols such as trimethylolpropane triglycidyl ether, glycerin triglycidyl ether, pentaerythritol tetraglycidyl ether, sorbitol hexaglycidyl ether, and polyglycerin polyglycidyl ether; and triglycidyl isocyanurate.

Examples of the glycidyl ester-type epoxide include: glycidyl esters of carboxylic acids such as glycidyl methacrylate, phthalic acid diglycidyl ester, isophthalic acid diglycidyl ester, terephthalic acid diglycidyl ester, cyclohexanedicarboxylic acid diglycidyl ester, and trimellitic acid triglycidyl ester; and glycidyl ester-type polyepoxides.

Examples of the glycidyl amine-type epoxide include: glycidyl aromatic amines such as N,N-diglycidylaniline,

N,N-diglycidyltoluidine,
N,N,N',N'-tetraglycidyldiaminodiphenylmethane,

N,N,N',N'-tetraglycidyldiaminodiphenylsulfone, and
N,N,N',N'-tetraglycidyldiethyldiphenylmethane; and
glycidyl heterocyclic amines such as
bis(N,N-diglycidylaminocyclohexyl)methane (hydride of N,N,N',N'-tetraglycidyldiaminodiphenylmethane),
N,N,N',N'-tetraglycidyl-1,3-(bisaminomethyl)cyclohexane (hydride of N,N,N',N'-tetraglycidylxylylene diamine),
trisglycidylmelamine, triglycidyl-p-aminophenol,
N-glycidyl-4-glycidyloxypyrrolidone.

Examples of the alicyclic epoxide include vinyl cyclohexene dioxide, limonene dioxide, dicyclopentadiene dioxide, bis(2,3-epoxycyclopentyl) ether, ethylene glycol bisepoxy dicyclopentyl ether, 3,4-epoxy -6-methylcyclohexylmethyl 3',4'-epoxy -6'-methylcyclohexane carboxylate, 3,4-epoxycyclohexylmethyl 3,4-epoxycyclohexane carboxylate, 3,4-epoxy-1-methylcyclohexyl 3,4-epoxy-1-methylhexane carboxylate, 3,4-epoxy-3-methylcyclohexylmethyl 3,4-epoxy -3-methylhexane carboxylate, 3,4-epoxy -5-methylcyclohexylmethyl 3,4-epoxy -5-methylcyclohexane carboxylate, 2-(3,4-epoxycyclohexyl-5,5-spiro-3,4-epoxy)cyclohexane-metad ioxane, methylenebis(3,4-epoxycyclohexane), (3,3',4,4'-diepoxy)bicyclohexyl, 1,2-epoxy-(2-oxiranyl)cyclohexane adduct of 2,2-bis(hydroxymethyl)-1-butanol, and tetrahydroindene diepoxide. The curable composition according to the present invention may contain one kind, or two or more kinds of epoxy compounds other than the compound represented by formula (1), such as those as described above.
From the viewpoint of excellent heat resistance of the cured product, the content of the epoxy compound other than the compound represented by formula (1) is preferably 1 to 90 % by mass, more preferably 1 to 70 % by mass with respect to the curable composition.
In a preferred embodiment, the epoxy compound other than the compound represented by formula (1) contained in the curable composition of the present invention comprises one or more selected from the group consisting of glycidyl ether type epoxide, glycidyl ester type epoxide, and alicyclic epoxide.

(4) Reactive Diluent

The curable composition according to the present invention may further contain a reactive diluent in order to reduce the viscosity. Examples of the reactive diluent include a monoepoxy compound produced by the method described in WO2017/159637, butyl glycidyl ether, 2-ethylhexyl glycidyl ether, glycidyl ether of a mixture of C12 and C13 alcohols, and 1,2-epoxy-4-vinylcyclohexane. The curable composition may contain one kind, or two or more kinds of the reactive diluents as described above. The mixing ratio of the reactive diluent may be adjusted as appropriate such that the curable composition containing the reactive diluent has a desired viscosity.

(5) Oxetane compound

The curable composition according to the present invention may contain an oxetane compound. Examples of the oxetane compound include 1,4-bis[(3-ethyl-3-oxetanylmethoxy)methyl]benzene, 3-ethyl-3-hydroxymethyloxetane, 3-ethyl-3-(phenoxymethyl)oxetane, di[(3-ethyl-3-oxetanyl)methyl] ether, 3-ethyl-3-(2-ethylhexyloxymethyl)oxetane, 3-ethyl-3-(cyclohexyloxymethyl)oxetane, phenol novolac oxetane, 1,3-bis[(3-ethyloxetan-3-yl)]methoxybenzene, oxetanyl silsesquioxane, oxetanyl silicate, bis[1-ethyl(3-oxetanyl)]methyl ether, 4,4'-bis[(3-ethyl-3-oxetanyl)methoxymethyl]biphenyl, 4,4'-bis(3-ethyl-3-oxetanylmethoxy)biphenyl, ethylene glycol (3-ethyl-3-oxetanylmethyl) ether, diethylene glycol bis(3-ethyl-3-oxetanylmethyl) ether, bis(3-ethyl-3-oxetanylmethyl) diphenoate, trimethylolpropane propane tris(3-ethyl-3-oxetanylmethyl) ether, pentaerythritol tetrakis(3-ethyl-3-oxetanylmethyl) ether, and phenol novolac-type oxetane compounds. The curable composition according to the present invention may contain one or two or more of the oxetane compounds as described above.
From the viewpoint of excellent heat resistance of the cured product, the content of the oxetane compound in the curable composition of the present invention is preferably 1 to 90 % by mass, more preferably 1 to 70 % by mass.

(6) Vinyl ether compound

The curable composition according to the present invention may contain a vinyl ether compound. Examples of the vinyl ether compound include: monofunctional vinyl ethers such as methyl vinyl ether, ethyl vinyl ether, propyl vinyl ether, and butyl vinyl ether; polyfunctional vinyl ethers such as ethylene glycol divinyl ether, butanediol divinyl ether, cyclohexanedimethanol divinyl ether, cyclohexanediol divinyl ether, trimethylolpropane trivinyl ether, pentaerythritol tetravinyl ether, glycerol trivinyl ether, triethylene glycol divinyl ether, and diethylene glycol divinyl ether; vinyl ether compounds containing a hydroxyl group such as hydroxyethyl vinyl ether, hydroxybutyl vinyl ether, cyclohexanedimethanol monovinyl ether, cyclohexanediol monovinyl ether, 9-hydroxynonyl vinyl ether, propylene glycol monovinyl ether, neopentyl glycol monovinyl ether, glycerol divinyl ether, glycerol monovinyl ether, trimethylolpropane divinyl ether, trimethylolpropane monovinyl ether, pentaerythritol monovinyl ether, pentaerythritol divinyl ether, pentaerythritol trivinyl ether, diethylene glycol monovinyl ether, triethylene glycol monovinyl ether, tetraethylene glycol monovinyl ether, tricyclodecanediol monovinyl ether, and tricyclodecane dimethanol monovinyl ether; and vinyl ethers containing different types of functional groups, such as 2-(2-vinyloxyethoxy)ethyl acrylate, and 2-(2-vinyloxyethoxy)ethyl methacrylate. The curable composition according to the present invention may contain one kind, or two or more kinds of the vinyl ether compounds as described above.

From the viewpoint of excellent heat resistance of the cured product, the content of the vinyl ether compound in the curable composition of the present invention is preferably 1 to 90 % by mass, and more preferably 1 to 70 % by mass.

(7) Compound containing a hydroxyl group

The curable composition according to the present invention may further contain a compound containing a hydroxyl group. Incorporation of a compound containing a hydroxyl group into the curable composition allows a moderate curing reaction to proceed. Examples of the compound containing a hydroxyl group include ethylene glycol, diethylene glycol, and glycerin. The curable composition according to the present invention may contain one or two or more of the compounds containing a hydroxyl group, such as those described above.

From the viewpoint of excellent heat resistance of the cured product, the content of the compound having a hydroxyl group in the curable composition of the present invention is preferably 0.1 to 10 % by mass, more preferably 0.2 to 8 % by mass.

(8) Other components

The curable composition according to the present invention may further contain a solvent. Examples of the solvent include methyl ethyl ketone, ethyl acetate, toluene, methanol, and ethanol.

The curable composition of the present invention may contain various additives within a range that its properties are not impaired. Examples of the additives include fillers, silane coupling agents, release agents, flame retardants, antioxidants, defoamers, light stabilizers, colorants such as pigments and dyes, plasticizers, pH adjusters, color preventing agents, matting agents, deodorants, weathering agents, antistatic agents, thread friction reducing agents, slip agents, ion exchangers, and the like.

(9) Preparation of Curable Composition

The curable composition according to the present invention can be produced in accordance with technical common knowledge widely known to those skilled in the art, and the components to be further included in the curable composition and the preparation method of the curable composition can be selected appropriately.

3. Cured product

(1) Conditions for Curing

The cured product according to the present invention is obtained by curing the above described curable composition according to the present invention. The method of curing the curable composition is not particularly limited, and the composition can be cured by heating or irradiation of light, as appropriate.

When a curable composition is cured by heating, it is preferable to heat the curable composition in a multistage manner, in consideration of the high reactivity of the epoxy compound. This makes it possible to sufficiently promote the curing reaction. For example, the curing reaction can be carried out by primary heating at 20 to 130 °C for 10 to 150 minutes and secondary heating at 130 to 220 °C for 30 to 480 minutes. For example, the curing reaction can be carried out by primary heating at 20 to 45 °C for 10 to 150 minutes, secondary heating at 45 to 55 °C for 10 to 150 minutes, tertiary heating at 55 to 65 °C for 10 to 150 minutes, and quaternary heating at 65 to 220 °C for 30 to 480 minutes. For example, the curing reaction can be carried out by primary heating at 20 to 30 °C for 10 to 150 minutes, secondary heating at 30 to 35 °C for 10 to 150 minutes, tertiary heating at 35 to 45 °C for 10 to 150 minutes, quaternary heating at 45 to 65 °C, and quinary heating at 65 to 220 °C for 30 to 480 minutes. However, without being limited by such, it is preferable to conduct by taking into consideration the content of the epoxy compound, the properties of other compounds contained in the curable composition, and the like, and change them as needed.

In cases where the curable composition is cured by the irradiation of an active energy ray, such as a visible ray, UV light, an X ray or an electron beam, the type of the active energy ray used and the conditions for irradiation are preferably selected as appropriate, depending on the composition of the curable composition. In one embodiment, it is preferred that the irradiation of UV light be carried out such that the accumulated amount of light, which is represented

as the product of the irradiation intensity and the irradiation time, is adjusted within the range of from 10 to 5,000 $mJ/cm^2$. When the accumulated amount of light irradiated to the curable composition is adjusted within the above described numerical range, it is possible to allow active species derived from the photo-cationic polymerization initiator to be generated sufficiently. This also allows for an improvement in the productivity.

(2) Use of cured product

Specific examples of the application of the curable composition according to the present invention and the cured product obtained therefrom include: coating materials for coating on substrates such as metals, resin films, glass, paper and wood, surface protective films for semiconductor devices and organic thin film elements (for example, organic electroluminescent elements and organic thin film solar cell elements), hard coating agents, anti-fouling films and antireflection films; adhesive agents, tacky materials; various types of optical members such as lenses, prisms, filters, image display materials, lens arrays, sealing materials and reflector materials for optical semiconductor devices, sealing materials for semiconductor devices, optical waveguides, light guide plates, light diffusion plates, diffraction elements and optical adhesive agents; and materials such as casting materials, interlayer insulators, insulating films for printed substrates and fiber-reinforced composite materials.

EXAMPLES

Hereinafter, the present invention shall be described in more details with reference to the Examples, but the present invention shall not be limited to these Examples.

1. Preparation Example 1: Preparation of Epoxy compound (A-2) satisfying the above formula (1)

To a reaction vessel equipped with a thermometer, a stirrer, a reflux tube, and a dropping device were introduced 23.5 kg of chloroform and 1.6 kg of a compound represented by the following formula (10) satisfying the above formula (3), and 4.5 kg of metachloroperbenzoic acid was added dropwise while stirring at 0 °C. The temperature was raised to room temperature, and the reaction was carried out for 12 hours. Then, after the by-product metachlorobenzoic acid was removed by filtration, the filtrate was washed three times with a 1N aqueous sodium hydroxide solution and then washed with saturated brine. After the organic layer was dried over magnesium sulfate, the magnesium sulfate was removed by filtration and the filtrate was concentrated to obtain a crude material. 2 kg of toluene was added to the crude material, and the mixture was dissolved at room temperature. To this was dropped 6 kg of heptane, and crystallization occurred. The crystallized product was aged at 5 °C for 1 hour. The crystallized product was collected by filtration and washed with hexane. After drying under reduced pressure for 24 hours, an Epoxy compound (A-2) represented by formula (11) and satisfying the above formula (1) was obtained as a white solid of 1.4 kg. The epoxy equivalent of the Epoxy compound (A-2) thus obtained was measured in accordance with JIS K7236 and was 122 g/eq. The structure of the obtained epoxy compound (A-2) was measured by $^{13}$C-NMR to confirm that the desired epoxy compound (A-2) was obtained.

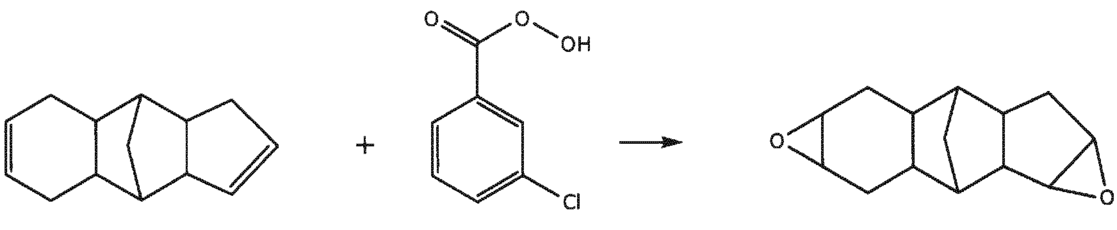

(10) (11)

2. Example 1: Preparation and evaluation of a curable composition comprising an epoxy compound and a cationic polymerization initiator or an onium salt-type cationic polymerization initiator, containing a Lewis acid and a Lewis base

(1) Example 1-1

Production of Curable Composition

A commercially available Epoxy compound (A-1) and a cationic polymerization initiator (B-1) containing a Lewis acid and a Lewis base were mixed so that the following composition is achieved, thereby obtaining a curable composition.

<Composition of Curable Composition>

- Epoxy compound (A-1) 100 parts by mass
- Cationic polymerization initiator (B-1) 1 part by mass

Here, each component of the above composition is as follows.

/Epoxy compound (A-1): Tetrahydroindene diepoxide, manufactured by JXTG Energy, product name: THI-DE

- Cationic polymerization initiator (B-1): manufactured by Nippon Shokubai Co., Ltd., product name: FX-TP-BC-PC-AD-57130

Note that the Cationic polymerization initiator (B-1) is a cationic polymerization initiator containing a Lewis acid and a Lewis base.

(2) Examples 1-2 to 1-6 and Comparative Examples 1-1 to 1-4

A curable composition was obtained in the same manner as in Example 1-1, except that the composition of the curable composition was changed as shown in Table 2 by using the following components.
Each of the components of the composition of Comparative Example 1-1 is as follows:

- Epoxy compound (A-1): tetrahydroindene diepoxide, manufactured by JXTG Energy, product name: THI-DE
- Epoxy compound (A-2): obtained by the method described in Preparation Example 1
- Another epoxy compound: 3',4'-epoxycyclohexylmethyl 3,4-epoxycyclohexanecarboxylate, manufactured by Daicel Corporation, product name: Celloxide 2021P
- Cationic polymerization initiator (B-1): manufactured by Nippon Shokubai Co., Ltd., product name: FX-TP-BC-PC-AD-57130
- Cationic polymerization initiator (B-2): manufactured by Nippon Shokubai Co., Ltd., product name: FX-TP-BC-PC-AD-57110
- Cationic polymerization initiator (B-3): manufactured by Nippon Shokubai Co., Ltd., product name: FX-TP-BC-PC-AD-57103
- Cationic polymerization initiator (C-1): 4-acetoxyphenyldimethylsulfonium hexafluoroantimonate, manufactured by Sanshin Chemical Industry Co., Ltd., product name: SI-150L
- Cationic polymerization initiator (C-2): 4-hydroxyphenyl($\alpha$-naphthylmethyl)methylsulfonium hexafluoro phosphate 1-naphthylmethylmethyl p-hydroxyphenylsulfonium hexafluorophosphate, manufactured by Sanshin Chemical Industry Co., Ltd., product name: SI-360
- Cationic polymerization initiator (C-3): 4-hydroxyphenylbenzylmethylsulfonium tetrakis(pentafluorophenyl)borate, manufactured by Sanshin Chemical Industry Co., Ltd., product name: SI-B3

The Cationic polymerization initiators (B-1) to (B-3) are cationic polymerization initiators containing a Lewis acid and a Lewis base. The Cationic polymerization initiators (C-1) to (C-3) are cationic polymerization initiators of an onium salt type.

Physical Property Evaluation

The curable compositions obtained in Examples 1-1 to 1-6 and Comparative Examples 1-1 to 1-4 were heated under the following curing conditions to obtain cured products.

(a) Example 1-1

The curable composition thus obtained was heated in a hot-air circulation oven at 40 °C for 2 hours, 50 °C for 1 hour, 60 °C for 1 hour, and 180 °C for 2 hours to obtain a cured product.

(b) Example 1-2

The curable composition thus obtained was heated in a hot-air circulation oven at 25 °C for 1 hour, 30 °C for 1 hour, 35 °C for 1 hour, 50 °C for 1 hour and 180 °C for 2 hours to obtain a cured product.

(c) Example 1-3

The curable composition thus obtained was heated in a hot-air circulation oven at 25 °C for 2 hours, 30 °C for 1 hour, 35 °C for 1 hour, 50 °C for 1 hour and 180 °C for 2 hours to obtain a cured product.

(d) Example 1-4

The curable composition thus obtained was heated in a hot-air circulation oven at 100 °C for 1 hour and at 180 °C for 2 hours to obtain a cured product.

(e) Example 1-5

The curable composition thus obtained was heated in a hot-air circulation oven at 80 °C for 1 hour and at 180 °C for 2 hours to obtain a cured product.

(f) Example 1-6

The curable composition thus obtained was heated in a hot-air circulation oven at 80 °C for 1 hour and at 180 °C for 2 hours to obtain a cured product.

(a') Comparative Example 1-1

The curable composition thus obtained was heated in a hot-air circulation oven at 85 °C for 3 hours, 90 °C for 1 hour, 120 °C for 1 hour, 150 °C for 1 hour, and 210 °C for 2 hours to obtain a cured product.

(b') Comparative Example 1-2

The curable composition thus obtained was heated in a hot-air circulation oven at 35 °C for 2 hours, 40 °C for 2 hours, 45 °C for 1 hour, 80 °C for 1 hour, and 180 °C for 6 hours to obtain a cured product.

(c') Comparative Example 1-3

The curable composition thus obtained was heated in a hot-air circulation oven at 60 °C for 2 hours, 70 °C for 1 hour, 90 °C for 1 hour and 160 °C for 2 hours to obtain a cured product.

(d') Comparative Example 1-4

The curable composition thus obtained was heated in a hot-air circulation oven at 100 °C for 1 hour, 110 °C for 1 hour, 120 °C for 1 hour, 140 °C for 1 hour, and 220 °C for 2 hours to obtain a cured product.

The obtained cured product was measured by a gas chromatograph mass spectrometer (manufactured by Agilent Technologies, model number: 7890A GC & 5975C GC/MSD) equipped with a head space sampler (manufactured by Agilent Technologies, model number: 7697A) using ethylbenzene as a standard material and a purge condition of 110 °C for 30 minutes. A peak area derived from outgas from the cured product was calculated, and the amount of outgas generated in terms of ethylbenzene was calculated by the following calculation formula.

Calculation formula for the amount of outgas generated in terms of ethylbenzene

Amount of outgas generated (ppm) = peak area derived from outgas × amount of ethylbenzene (μg) / (peak area of ethylbenzene × weight of cured product (g))

The obtained cured product was cut into 20 mm × 10 mm pieces, and the glass transition temperature was measured by raising the temperature to 30 to 300 °C at 10 °C/min using TMA7000 manufactured by Hitachi High-Tech Science Co., Ltd. as a thermomechanical analyzer (TMA). The glass transition temperature was defined as the heat resistance of the cured product.

The measurement results are shown in Table 2.

[Table 2]

| Table 2 | | Ex. 1-1 | Ex. 1-2 | Ex. 1-3 | Ex. 1-4 | Ex. 1-5 | Ex. 1-6 | Comp. Ex. 1 | Comp. Ex. 2 | Comp. Ex. 3 | Comp. Ex. 4 |
|---|---|---|---|---|---|---|---|---|---|---|---|
| Composition (Parts by mass) | Epoxy Compound (A-1) | 100 | 100 | 100 | | | | 100 | 100 | 100 | |
| | Epoxy Compound (A-2) | | | | 50 | 50 | 50 | | | | 50 |
| | Another Epoxy Compound | | | | 50 | 50 | 50 | | | | 50 |
| | Cationic Polymerization Initiator (B-1) | 1 | | | 1 | | | | | | |
| | Cationic Polymerization Initiator (B-2) | | 1 | | | 1 | | | | | |
| | Cationic Polymerization Initiator (B-3) | | | 1 | | | 1 | | | | |
| | Cationic Polymerization Initiator (C-1) | | | | | | | 2 | | | 2 |
| | Cationic Polymerization Initiator (C-2) | | | | | | | | 3 | | |
| | Cationic Polymerization Initiator (C-3) | | | | | | | | | 0.1 | |
| Amount of Outgass Generated (ppm) | | 2.9 | 5.3 | 5.9 | 1.7 | 1.0 | 1.1 | 21.5 | 11.3 | 11.7 | 9.2 |
| Heat Resistance (°C) | | 203 | 236 | 218 | 212 | 196 | 191 | 192 | 220 | 173 | 208 |

From the comparison between Examples 1-1 to 1-6 and Comparative Examples 1-1 to 1-4, it was found that the low outgassing property of the cured product is improved when a conventional cationic polymerization initiator of an onium salt type is replaced with a cationic polymerization initiator containing a Lewis acid and a Lewis base and cured, with respect to the cationic polymerization initiator to be contained in the curable composition.

## Claims

1. A curable composition comprising an epoxy compound represented by formula (1):

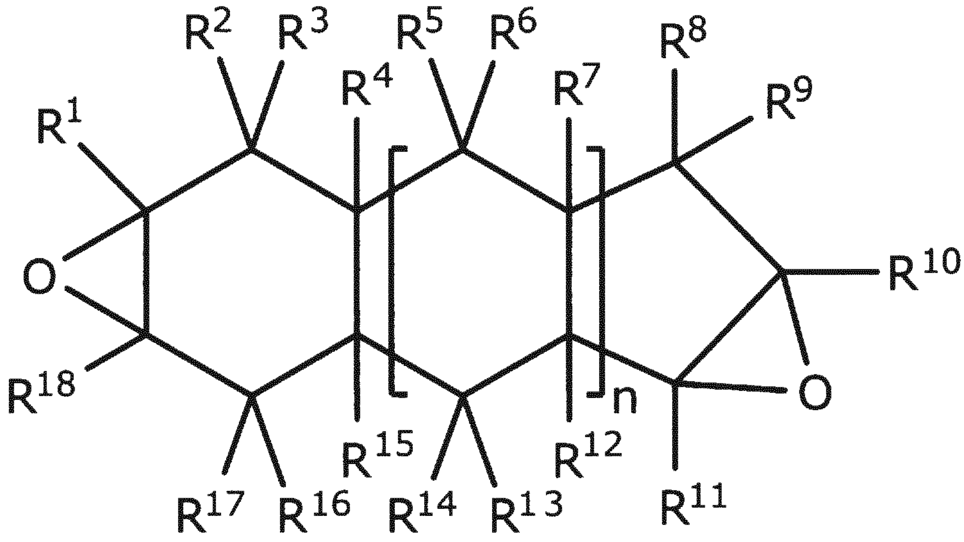

(1)

wherein $R^1$ to $R^4$, $R^7$ to $R^{12}$, and $R^{15}$ to $R^{18}$ are each independently selected from the group consisting of hydrogen, an alkyl group, and an alkoxy group;
$R^5$, $R^6$, $R^{13}$, and $R^{14}$ are each independently selected from the group consisting of hydrogen, an alkyl group, and an alkoxy group; or one of $R^5$ or $R^6$ and one of $R^{13}$ or $R^{14}$ may form a cross-linked structure represented by $-CH_2-$, and n is an integer of 0 or 1,
and a cationic polymerization initiator containing a Lewis acid and a Lewis base.

2. The curable composition according to claim 1, wherein the Lewis acid is a compound containing boron.

3. The curable composition according to claim 1 or 2, wherein the Lewis acid is tris(pentafluorophenyl)borane.

4. The curable composition according to any one of claims 1 to 3, wherein the Lewis base is an amine compound.

5. The curable composition according to any one of claims 1 to 4, wherein the Lewis base is an amine compound having a piperidine structure.

6. The curable composition according to any one of claims 1 to 5, wherein the cationic polymerization initiator is a complex of tris(pentafluorophenyl)borane and an amine compound having a piperidine structure.

7. The curable composition according to any one of claims 1 to 6, further comprising one or two or more selected from the group consisting of an epoxy compound other than the compound represented by formula (1), an oxetane compound, and a vinyl ether compound.

**8.** The curable composition according to any one of claims 1 to 7, wherein the content of the epoxy compound represented by formula (1) is 10 to 99 % by mass.

**9.** The curable composition according to any one of claims 1 to 8, wherein the cationic polymerization initiator is a thermal cationic polymerization initiator.

**10.** The curable composition according to claim 9, wherein the content of the thermal cationic polymerization initiator is 0.1 to 15 parts by mass with respect to 100 parts by mass of the epoxy compound represented by formula (1) contained in the curable composition when the curable composition contains none of an epoxy compound other than the compound represented by formula (1), an oxetane compound, or a vinyl ether compound, and is 0.1 to 15 parts by mass with respect to the total of 100 parts by mass of the epoxy compound represented by formula (1) contained in the curable composition, an epoxy compound other than the compound represented by formula (1), an oxetane compound, and a vinyl ether compound when the curable composition contains one or two or more selected from the group consisting of the epoxy compound other than the compound represented by formula (1), an oxetane compound, and a vinyl ether compound.

**11.** The curable composition according to any one of claims 1 to 8, wherein the cationic polymerization initiator is a photocationic polymerization initiator.

**12.** The curable composition according to claim 11, wherein the content of the photocationic polymerization initiator is 0.1 to 20 parts by mass with respect to 100 parts by mass of the epoxy compound represented by formula (1) contained in the curable composition when the curable composition contains none of an epoxy compound other than the compound represented by formula (1), an oxetane compound, or a vinyl ether compound, and is 0.1 to 20 parts by mass with respect to the total of 100 parts by mass of the epoxy compound represented by formula (1) contained in the curable composition, an epoxy compound other than the compound represented by formula (1), an oxetane compound, and a vinyl ether compound when the curable composition contains one or two or more selected from the group consisting of the epoxy compound other than the compound represented by formula (1), an oxetane compound, and a vinyl ether compound.

**13.** The curable composition according to any one of claims 7 to 12, wherein the epoxy compound other than the compound represented by formula (1) is one or more epoxy compounds selected from the group consisting of glycidyl ether type epoxide, glycidyl ester type epoxide, and alicyclic epoxide.

**14.** A method for producing a cured product, comprising the step of curing the curable composition according to any one of claims 1 to 13.

**15.** A cured product of the curable composition according to any one of claims 1 to 13.

**INTERNATIONAL SEARCH REPORT**

International application No.
PCT/JP2020/015609

A. CLASSIFICATION OF SUBJECT MATTER
C08G 59/24(2006.01)i
FI: C08G59/24
According to International Patent Classification (IPC) or to both national classification and IPC

B. FIELDS SEARCHED
Minimum documentation searched (classification system followed by classification symbols)
C08G59/24

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>A | US 2962453 A (UNION CARBIDE CORPORATION) 29.11.1960 (1960-11-29) example 1, etc. | 1-2, 4-5, 7-15<br>3, 6 |
| X<br>A | US 3198851 A (UNION CARBIDE CORPORATION) 03.08.1965 (1965-08-03) table 3, example 49, etc. | 1-2, 4-5, 7-15<br>3, 6 |
| X<br>A | US 3242108 A (UNION CARBIDE CORPORATION) 22.03.1966 (1966-03-22) table 1, example 8, etc. | 1-2, 4-5, 7-15<br>3, 6 |
| A | WO 2017/164238 A1 (JX ENERGY CORPORATION) 28.09.2017 (2017-09-28) | 1-15 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 June 2020 (29.06.2020) | 14 July 2020 (14.07.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## INTERNATIONAL SEARCH REPORT
Information on patent family members

International application No.
PCT/JP2020/015609

| Patent Documents referred in the Report | Publication Date | Patent Family | Publication Date |
|---|---|---|---|
| US 2962453 A | 29 Nov. 1960 | (Family: none) | |
| US 3198851 A | 03 Aug. 1965 | (Family: none) | |
| US 3242108 A | 22 Mar. 1966 | (Family: none) | |
| WO 2017/164238 A1 | 28 Sep. 2017 | EP 3434709 A1<br>KR 10-2018-0127326 A<br>CN 109071776 A<br>TW 201802134 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014175129 A
- WO 2017164238 A
- WO 2012036164 A
- WO 2017159637 A